**Europäisches Patentamt**

**European Patent Office**

**Office européen des brevets**

(19)

(11) Veröffentlichungsnummer: **0 324 914 B1**

(12) **EUROPÄISCHE PATENTSCHRIFT**

(45) Veröffentlichungstag der Patentschrift: **03.06.92**

(21) Anmeldenummer: **88118935.1**

(22) Anmeldetag: **14.11.88**

(51) Int. Cl.5: **B60R 9/04**

(54) **Dachgepäckträgerbefestigung an einem Kraftfahrzeug.**

(30) Priorität: **16.01.88 DE 3802160**

(43) Veröffentlichungstag der Anmeldung:
**26.07.89 Patentblatt 89/30**

(45) Bekanntmachung des Hinweises auf die
Patenterteilung:
**03.06.92 Patentblatt 92/23**

(84) Benannte Vertragsstaaten:
**DE ES FR GB IT**

(56) Entgegenhaltungen:
**DE-A- 3 306 360**
**FR-A- 2 233 477**
**US-A- 3 519 180**
**US-A- 3 724 730**

(73) Patentinhaber: **Dr.Ing.h.c. F. Porsche Aktien-**
**gesellschaft**
**Porschestrasse 42**
**W-7000 Stuttgart 40(DE)**

(72) Erfinder: **Hempel, Ulrich, Dipl.-Ing. FH**
**Kirchstrasse 7**
**W-7253 Renningen 2(DE)**
Erfinder: **Durm, Jürgen, Dipl.-Ing. FH**
**Wolf-Hirth-Strasse 4**
**W-7257 Ditzingen(DE)**

Rank Xerox (UK) Business Services

**Beschreibung**

Die Erfindung bezieht sich auf eine Dachgepäckträgerbefestigung an einem Kraftfahrzeug, wobei ein Stützfuß des Dachgepäckträgers abschnittsweise an die Außenseite der Karosserie herangeführt und mittels eines Befestigungselementes in Lage gehalten ist, das in ein aufbauseitig feststehendes Innengewinde eingedreht ist.

Bei einer bekannten Dachgepäckträgerbefestigung der eingangs genannten Gattung (DE-A-3 306 360) ist innerhalb des Dachholmes eine Gewindehülse angeordnet, in die von der Fahrzeugaußenseite her eine Schraube eingedreht ist. Die Schraube wird nach dem Aufsetzen des Stützfußes (Adapter) auf die Karosserie durch eine Öffnung des Stützfußes hindurchgeführt.

Dieser Anordnung haftet der Nachteil an, daß die Montage des Dachgepäckträgers zeitaufwendig ist, da vor dem Aufsetzen der Stützfüße die Schrauben aus den Gewindehülsen herausgedreht und anschließend wieder vollständig eingedreht werden müssen. Eine diebstahlsichere Anordnung der Schrauben wird bei dieser Konstruktion dadurch erzielt, daß ein oberes Rahmenteil der Tür soweit hochgezogen ist, daß es bei geschlossener Tür die Schrauben verdeckt. Die Montage des Dachgepäckträgers ist deshalb nur bei geöffneter Tür möglich.

Aufgabe der Erfindung ist es, eine Dachgepäckträgerbefestigung an einem Kraftfahrzeug zu schaffen, die bei guter Funktion einen einfachen Aufbau aufweist und sich schnell am Fahrzeug montieren läßt. Außerdem sollen die Befestigungselemente auch bei geöffneter Tür diebstahlsicher angeordnet sein.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Ausbildung des Stützfußes und des Befestigungselementes eine Dachgepäckträgerbefestigung geschaffen wird, die bei guter Funktion im Aufbau einfach ist und sich schnell an der Karosserie montieren und demontieren läßt. Außerdem ist des Befestigungselement unabhängig von der Stellung der Tür diebstahlsicher angeordnet. Durch die in Einschubrichtung offenen Längsschlitze wird ein einfaches Aufschieben der Stützfüße auf die Halteabschnitte des Gewindezapfens erreicht, ohne daß zuvor die Gewindezapfen demontiert werden müssen. Die Montagestellung des Gewindezapfens zum Aufschieben der Stützfüße wird durch den am Gewindezapfen vorgesehenen Ansatz definiert, wenn dieser an der Stirnseite des Innengewindes anliegt. Der am Gewindezapfen angeordnete Innensechskant bewirkt, daß dieser in einfacher Weise vom Fahrgastraum aus betätigbar bzw. verstellbar ist. Dadurch wird ein guter Diebstahlschutz für den Dachgepäckträger erzielt.

Ein Ausführungsbeispiel der Erfindung ist in der Zeichnung dargestellt und wird im folgenden näher erläutert.

Es zeigt

Fig. 1      eine Seitenansicht auf eine Dachgepäckträgerbefestigung,

Fig. 2      einen Schnitt nach der Linie II-II der Fig. 1 in größerem Maßstab, mit festgezogenem Dachgepäckträger,

Fig. 3      einen Schnitt entsprechend Fig. 2, jedoch mit aufgestecktem, aber unbefestigtem Dachgepäckträger,

Fig. 4      eine Ansicht in Pfeilrichtung R der Fig. 2,

Fig. 5      den Gewindezapfen gemäß Fig. 2 in größerem Maßstab.

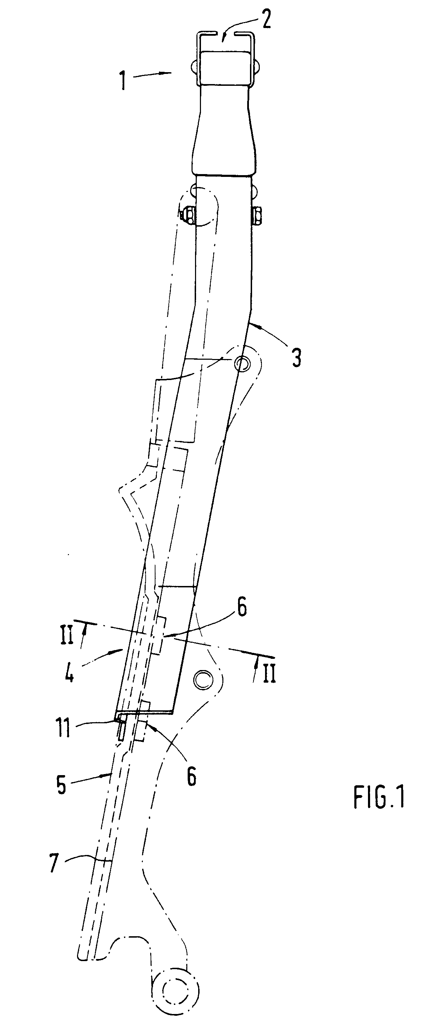

In Fig. 1 ist ein hinterer Dachgepäckträger 1 eines Dachtransportsystems dargestellt, der sich aus einem querverlaufenden Trägerteil 2 und seitlich außenliegenden Stützfüßen 3 zusammensetzt. Die Stützfüße 3 liegen mit ihren unteren Endbereichen 4 abschnittsweise an der Außenseite der Karosserie 5 eines Kraftfahrzeuges an und sind mittels Befestigungselementen 6 in Lage gehalten.

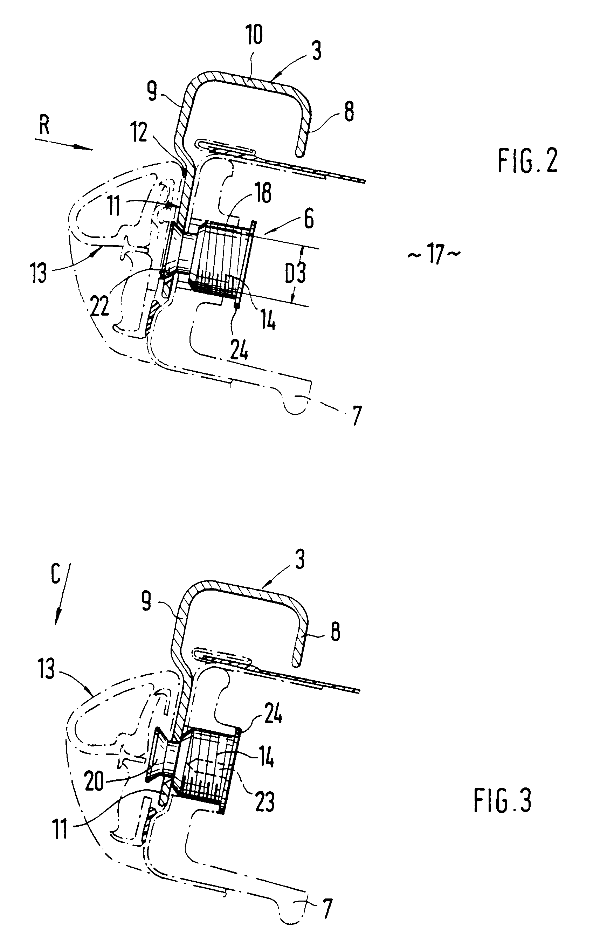

Gemäß Fig. 2 sind die Stützfüße 3 an einem schwenkbaren Hauptspriegel 7 eines nicht näher dargestellten Cabrioverdecks befestigt.

Die Stützfüße 3 sind im Querschnitt gesehen, etwa U-förmig profiliert, wobei die beiden Schenkel 8, 9 in Fahrzeugquerrichtung verlaufen, während der Verbindungssteg 10 etwa parallel zu einer Fahrzeuglängsrichtung ausgerichtet ist. Der Schenkel 9 weist im Befestigungsbereich des Stützfußes 3 eine plattenförmige Abstellung 11 auf, die in Fortsetzung des Schenkels 9 verläuft und versetzt zu diesem angeordnet ist. Bei der Montage des Dachgepäckträgers 1 wird die Abstellung 11 in eine Spaltöffnung 12 zwischen dem Hauptspriegel 7 und einer am Hauptspriegel angebrachten Dichtleiste 13 eingeführt und auf die übereinanderliegend angeordneten Befestigungselemente 6 aufgeschoben. Die Spaltöffnung 12 erstreckt sich in Fahrzeugquerrichtung und ist zur Außenseite hin offen ausgebildet.

Jedes Befestigungselement 6 wird durch einen von einem Fahrgastraum 17 aus verstellbaren Gewindezapfen 14 gebildet, der auf der dem Stützfuß 3 zugekehrten Seite einen endseitigen Halteabschnitt 15 aufweist, auf den der Stützfuß 3 mittels eines in Einschubrichtung offenen Längsschlitzes 16 aufschiebbar ist. Ein Verspannen des Stützfußes 3 gegen die Karosserie 5 wird dadurch erreicht, daß der in ein Innengewinde 18 des Hauptspriegels 7 eingesetzte Gewindezapfen 14 in Richtung Fahrgastraum 17 gedreht wird.

Der Halteabschnitt 15 setzt sich aus einem an den Gewindezapfen 14 anschließenden, zylindrischen Bereich 19 und einem endseitigen Spannkragen 20 zusammen. Der zylindrische Bereich 19 weist einen Durchmeser D1 auf, der etwas kleiner ist als die Breite B des Längsschlitzes 16. Beim endseitigen Spannkragen 20 dagegen ist der größte Durchmesser D2 größer als die Breite B des Längsschlitzes 16, jedoch kleiner als der Kerndurchmesser D3 des Innengewindes 18. Durch diese Ausbildung kann der Halteabschnitt 15 vom Fahrgastraum 17 aus durch das Innengewinde 18 hindurchgeführt werden.

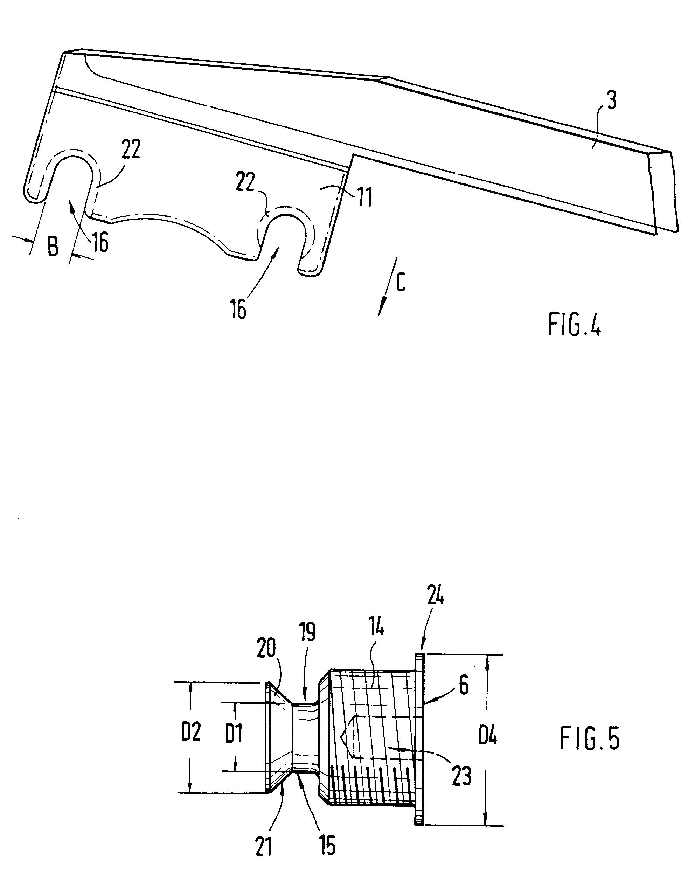

Gemäß Fig. 5 weist der Spannkragen 20 auf der dem zylindrischen Bereich 19 zugekehrten Seite eine kegelstumpfförmige Anschrägung 21 auf, die mit einer korrespondierenden Schräge 22 des Längsschlitzes 16 zusammenwirkt. Durch die Anschrägung 21 und die Schräge 22 wird das Aufschieben des Stützfußes 3 auf den Halteabschnitt 15 des Gewindezapfens 14 und das nachfolgende Anziehen des Gewindezapfens 14 erleichtert. Es besteht aber auch die Möglichkeit, daß der Spannkragen 20 ebenfalls zylindrisch ausgebildet ist und daß am Längsschlitz 16 keine Schräge 22 vorgesehen ist.

Zur einfachen Verstellbewegung des Gewindezapfens 14 ist an der dem Fahrgastraum 17 zugekehrten Stirnseite des Gewindezapfens 14 ein Innensechskant 23 ausgebildet, in den ein entsprechendes Hilfswerkzeug einsetzbar ist. Ferner ist am Gewindezapfen 14 an dem dem Fahrgastraum 17 zugekehrten Ende ein zylindrischer Ansatz 24 angeordnet, der einen größeren Durchmesser D4 aufweist als der Durchmesser D3 des Innengewindes 18. Der Ansatz 24 stützt sich bei voll eingedrehtem Gewindezapfen 14 an der Innenseite des Hauptspriegels 7 bzw. am innenliegenden Ende des Innengewindes 18 ab, wobei in dieser Position des Gewindezapfens 14 das Aufschieben des Stützfußes 3 auf den Halteabschnitt erfolgt (Fig. 3). Der endseitige Spannkragen 20 verläuft dabei mit Abstand zur plattenförmigen Abstellung 11 des Stützfußes 3, so daß die Stützfüße 3 auf die zylindrischen Bereiche 19 des Gewindezapfens 14 aufschiebbar sind.

Die beiden Längsschlitze 16 erstrecken sich - in Höhenrichtung gesehen - , mit Abstand zueinander und sind in Einschubrichtung C offen, so daß beim Aufschieben des Stützfußes 3 die Gewindezapfen 14 in ihrer eingedrehten Stellung verbleiben können.

Gemäß den Fig. 2 und 3 ist das Innengewinde 18 unmittelbar an der außenliegenden Karosserie 5 angeordnet, die in diesem Bereich durch den Hauptspriegel 7 gebildet wird. Es besteht aber auch die Möglichkeit, daß das Innengewinde 18 an einer nicht näher dargestellten Gewindehülse angeordnet ist, die nachträglich fest mit der Karosserie 5 verbunden wird. Außerdem kann eine derartige Dachgepäckträgerbefestigung an sämtlichen Bereichen der Karosserie erfolgen, also nicht ausschließlich an einem Hauptspriegel 7.

**Patentansprüche**

1. Dachgepäckträgerbefestigung an einem Kraftfahrzeug, wobei ein Stützfuß (3) des Dachgepäckträgers abschnittsweise an die Außenseite der Karosserie (5) herangeführt und mittels eines Befestigungselementes (6) in Lage gehalten ist, das in ein aufbauseitig feststehendes Innengewinde (18) eingedreht ist, wobei durch Anziehen des Befestigungselementes (6) in Richtung Fahrgastraum (17) der Stützfuß (3) gegen die Karosserie (5) spannbar ist, dadurch gekennzeichnet, daß das Befestigungselement (6) durch einen vom Fahrgastraum (17) des Kraftfahrzeuges aus verstellbaren Gewindezapfen (14) gebildet wird, der auf der dem Stützfuß (3) zugekehrten Seite einen endseitigen Halteabschnitt (15) aufweist, auf den der Stützfuß (3) mittels eines in Einschubrichtung offenen Längsschlitzes (16) aufschiebbar ist.

2. Dachgepäckträgerbefestigung nach Anspruch 1, dadurch gekennzeichnet, daß sich der Halteabschnitt (15) aus einem an den Gewindezapfen (14) angeformten zylindrischen Bereich (19) und einem endseitigen Spannkragen (20) zusammensetzt.

3. Dachgepäckträgerbefestigung nach Anspruch 1, dadurch gekennzeichnet, daß der zylindrische Bereich (19) einen kleineren Durchmesser (D1) aufweist, als die Breite (B) des Längsschlitzes (16) beträgt.

4. Dachgepäckträgerbefestigung nach Anspruch 1, dadurch gekennzeichnet, daß der endseitige Spannkragen (20) einen Durchmesser (D2) aufweist, der größer als die Breite (B) des Längsschlitzes (16) und kleiner als der Kerndurchmesser (D3) des aufbauseitig feststehenden Innengewindes (18) ist.

5. Dachgepäckträgerbefestigung nach Anspruch 1, dadurch gekennzeichnet, daß der Spannkragen (20) auf der dem zylindrischen Bereich (19) zugekehrten Seite eine kegelstumpfförmige Anschrägung (21) aufweist, die mit einer korrespondierenden Schräge (22) des Längsschlitzes zusammenwirkt.

6. Dachgepäckträgerbefestigung nach Anspruch 1, dadurch gekennzeichnet, daß der Gewindezapfen (14) an der dem Fahrgastraum (17) zugekehrten Stirnseite einen Innensechskant (23) aufweist.

7. Dachgepäckträgerbefestigung nach Anspruch 1, dadurch gekennzeichnet, daß der Gewindezapfen (14) an der dem Fahrgastraum (17) zugekehrten Seite mit einem Ansatz (24) versehen ist, wobei der Ansatz (24) einen größeren Durchmesser aufweist als das Innengewinde (18).

8. Dachgepäckträgerbefestigung nach Anspruch 1, dadurch gekennzeichnet, daß das Innengewinde (18) unmittelbar an einem Karosserieaußenteil (7) ausgebildet ist.

9. Dachgepäckträgerbefestigung nach Anspruch 1, dadurch gekennzeichnet, daß sich der Ansatz (24) beim Eindrehen des Gewindezapfens (14) an einem stirnseitigen Ende des Innengewindes (18) abstützt und eine Montagestellung des Gewindezapfens (14) zum Aufschieben des Stützfußes (3) definiert.

10. Dachgepäckträgerbefestigung nach Anspruch 1, dadurch gekenzeichnet, daß sich der Stützfuß (3) an einem Hauptspriegel (7) eines Cabrioverdecks abstützt und daß der Gewindezapfen (14) in eine am Hauptspriegel (7) vorgesehene Gewindebohrung eingedreht ist.

11. Dachgepäckträgerbefestigung nach Anspruch 1, dadurch gekennzeichnet, daß der Stützfuß (3) in eine Spaltöffnung (12) zwischen dem Hauptspriegel (7) und einer daran befestigten Dichtung (13) eingesetzt ist.

## Claims

1. A roof rack fastening on a motor vehicle, wherein a support foot (3) of the roof rack extends in part to the outside of the bodywork (5) and is held in position by means of a fastening member (6) screwed into an internal thread (18) fixed on the body, and the support foot (3) is clampable against the bodywork (5) by tightening the fastening member (6) in the direction towards the passenger compartment (17), characterized in that the fastening member (6) is formed by a threaded pin (14) adjustable from the passenger compartment (17) of the motor vehicle and provided at the end towards the support foot (3) with an end holding portion (15) onto which the support foot (3) can be pressed by means of a longitudinal slot (16) open in the direction of insertion.

2. A roof rack fastening according to Claim 1, characterized in that the holding portion (15) is formed from a cylindrical area (19) integrally moulded on the threaded pin (14) and from a clamping collar (20) at the end.

3. A roof rack fastening according to Claim 1, characterized in that the cylindrical area (19) has a smaller diameter (D1) than the width (B) of the longitudinal slot (16).

4. A roof rack fastening according to Claim 1, characterized in that the end of the clamping collar (20) has a diameter (D2) which is greater than the width (B) of the longitudinal slot (16) and smaller than the core diameter (D3) of the inner thread (18) fixed on the body.

5. A roof rack fastening according to Claim 1, characterized in that the clamping collar (20) is provided on the side towards the cylindrical area (19) with a frustoconical oblique portion (21) cooperating with a corresponding slope (22) of the longitudinal slot (16).

6. A roof rack fastening according to Claim 1, characterized in that the threaded pin (14) is provided on the end face towards the passenger compartment (17) with an hexagonal recess (23).

7. A roof rack fastening according to Claim 1, characterized in that the threaded pin (14) is provided on the end towards the passenger compartment (17) with an attachment (24), the attachment (24) having a greater diameter than the inner thread (18).

8. A roof rack fastening according to Claim 1, characterized in that the inner thread (18) is formed directly on an external part (7) of the bodywork.

9. A roof rack fastening according to Claim 1, characterized in that, as the threaded pin (14) is screwed up, the attachment (24) is supported on a front end of the inner thread (18) and defines an assembly position of the threaded pin (14) for pressing on the support foot (3).

10. A roof rack fastening according to Claim 1, characterized in that the support foot (3) is supported on a main hoop (7) of the roof of a convertible, and the threaded pin (14) is screwed into a threaded bore provided on the main hoop (7).

**11.** A roof rack fastening according to Claim 1, characterized in that the support foot (3) is inserted into a slot opening (12) between the main hoop (7) and a seal (13) secured thereto.

**Revendications**

**1.** Fixation de porte-bagages de toit sur un véhicule automobile, un pied d'appui (3) du porte-bagages étant rapproché par endroits du bord extérieur de la carrosserie (5) et maintenu en position au moyen d'un élément de fixation (6) qui est vissé dans un taraudage (18) fixe côté carrosserie, dans laquelle, par serrage de l'élément de fixation (6) en direction de l'habitacle (17), le pied d'appui (3) peut être serré contre la carrosserie (5), caractérisée en ce que l'élément de fixation (6) est formé par une cheville filetée (14) réglable à partir de l'habitacle (17) du véhicule, laquelle cheville filetée présente sur le côté tourné vers le pied d'appui (3), une partie de maintien (15) terminale sur laquelle le pied d'appui (3) peut être enfilé au moyen d'une fente longitudinale (16) ouverte dans le sens d'introduction.

**2.** Fixation de porte-bagages de toit selon la revendication 1, caractérisée en ce que la partie de maintien (15) se compose d'une zone (19) cylindrique formée sur la cheville filetée (14) et d'un collet de serrage (20) terminal.

**3.** Fixation de porte-bagages de toit selon la revendication 1, caractérisée en ce que la zone (19) cylindrique présente un diamètre (D1) inférieur à la largeur B de la fente longitudinale (16).

**4.** Fixation de porte-bagages de toit selon la revendication 1, caractérisée en ce que le collet de serrage (20) terminal présente un diamètre (D2) qui est supérieur à la largeur (B) de la fente longitudinale (16) et inférieur au diamètre de l'âme (D3) du taraudage (18) fixe côté carrosserie.

**5.** Fixation de porte-bagages de toit selon la revendication 1, caractérisée en ce que le collet de serrage (20) présente, sur le coté tourné vers la zone (19) cylindrique, un chanfrein (21) tronconique qui coopère avec une surface oblique (22) correspondante de la fente longitudinale.

**6.** Fixation de porte-bagages de toit selon la revendication 1, caractérisée en ce que la cheville filetée (14) présente un creux à six pans (23) sur le côté frontal tourné vers l'habitacle (17).

**7.** Fixation de porte-bagages de toit selon la revendication 1, caractérisée en ce que la cheville filetée (14) est pourvue d'un appendice (24), sur le côté tourné vers l'habitacle (17), l'appendice (24) ayant un diamètre supérieur au taraudage (18).

**8.** Fixation de porte-bagages de toit selon la revendication 1, caractérisée en ce que le taraudage (18) est formé directement sur une partie extérieure de carrosserie (7).

**9.** Fixation de porte-bagages de toit selon la revendication 1, caractérisée en ce que l'appendice (24) prend appui contre une extrémité frontale du taraudage (18), lorsque l'on serre la cheville filetée (14) et définit une position de montage de la cheville filetée (14), pour emmancher le pied d'appui (3).

**10.** Fixation de porte-bagages de toit selon la revendication 1, caractérisée en ce que le pied d'appui (3) prend appui contre un arceau principal (7) d'une capote de cabriolet et en ce que la cheville filetée (14) est vissée dans un trou taraudé prévu sur l'arceau principal (7).

**11.** Fixation de porte-bagages de toit selon la revendication 1, caractérisée en ce que le pied d'appui (3) est inséré dans une ouverture en fente (12) entre l'arceau principal (7) et un organe d'étanchéité (13) fixé sur celui-ci.

FIG.1

FIG. 2

~ 17 ~

FIG.3

7

FIG.4

FIG.5